# FASCICULE DE BREVET EUROPEEN

(11) **EP 0 849 964 B1**
(45) Date de publication et mention de la délivrance du brevet: **10.03.2004**
(21) Numéro de dépôt: 97403119.7
(22) Date de dépôt: 22.12.1997
(51) Int. Cl.: H04Q 7/22, G07B 13/00, G08G 1/127

(54) **Procédé et système d'appel centralisé pour accéder à un service, notamment pour l'appel centralisé de taxis**
Verfahren und zentrales Rufsystem mit Zugang zu einer Dienstleistung, insbesondere für zentralen Taxirufdienst
Method and system for centralized calling to access a service, especially centralized calling for taxis

(30) Priorité: 20.12.1996 FR 9615699
(43) Date de publication de la demande: 24.06.1998
(73) Titulaire: Bannery, Jacques, 75013 Paris (FR); Delfabbro, Marc, 75006 Paris (FR); Jamin, Bernard, 92310 Sèvres (FR)
(72) Inventeur: Bannery, Jacques, 75013 Paris (FR); Delfabbro, Marc, 75006 Paris (FR); Jamin, Bernard, 92310 Sèvres (FR)
(74) Mandataire: Thibon-Littaye, Annick

(56) Documents cités:
- WO-A-92/10069
- WO-A-95/35001
- FR-A- 2 674 355

## Description

La présente invention concerne un procédé d'appels centralisés pour accéder à un service.

L'invention concerne également un système pour la mise en oeuvre de ce procédé.

Elle s'applique notamment, bien que non exclusivement, à la gestion centralisée d'appels de taxis.

Dans ce qui suit, sans en limiter en quoi que ce soit la portée, on se placera dans le cadre de cette application préférée de l'invention, sauf mention contraire.

Dans l'art connu, un client qui désire emprunter un taxi a le choix entre plusieurs solutions et de façon pratique, entre les six solutions suivantes :
a/ se rendre à une station de taxis ;
b/ héler un véhicule sur la voie publique ;
c/ appeler une borne téléphonique spécifique située en tête de station ;
d/ appeler un standard téléphonique spécialisé ;
e/ appeler un chauffeur particulier à son domicile ou sur son téléphone mobile ;
f/ effectuer une réservation auprès d'un standard spécialisé, notamment en cas de parcours programmé à l'avance.

Ces divers modes opératoires comportent de nombreux inconvénients, tant pour le client que pour le professionnel.

On va tout d'abord répertorier brièvement les principales limitations imposées au client.

Le client qui désire se rendre à une station doit d'abord en connaître l'emplacement, ce qui n'est pas forcément le cas dans une grande agglomération ou dans un lieu inconnu. Il faut qu'il y ait un véhicule disponible, ce qui n'est pas toujours le cas (heure de pointe, heure tardive, etc.). Dans le cas contraire, il n'est pas possible d'appeler par l'intermédiaire de la borne téléphonique de la station (fonctionnement en réception uniquement). Enfin, en fonction des particularités de la course (distance à parcourir, etc.), le client n'est pas assuré que le chauffeur l'accepte.

Sur la voie publique, le client peut héler un taxi, mais il est souvent difficile de le repérer lorsque la circulation est dense. En outre, il est nécessaire que ce véhicule soit libre et non en route pour effectuer une course.

Pour appeler une borne téléphonique en tête de station (lorsqu'elle existe), il est nécessaire de connaître le numéro de téléphone. Il est donc nécessaire (sauf pour une station connue) de consulter un annuaire ou de disposer d'un moyen similaire (Minitel, etc.). On retrouve les mêmes problèmes que précédemment : disponibilité d'un taxi, etc.

L'appel à un standard spécialisé semble plus sûr. Cette méthode n'est pourtant pas exempte d'inconvénients. Il existe plusieurs standards de ce type dans les grandes agglomérations. Les taxis travaillent souvent aussi en dehors de la tutelle de ces standards (clientèle privée, etc.). Le client, toujours astreint à la recherche d'un numéro et doit attendre au téléphone que la standardiste trouve un taxi libre (le problème se pose de nouveau pour les heures de pointe) et doit attendre le taxi, ce qui peut demander plusieurs dizaines de minutes (embouteillage, accident, etc.). Le prix de la course est majoré en fonction du temps d'approche et de la prise en charge. L'intervention d'un tiers (standardiste) augmente les risques de malentendus (mauvaise adresse, etc.).

La gestion de ces standards étant assurée par des sociétés concurrentes, ils ne sont évidemment pas interconnectés. En cas d'indisponibilité de véhicule, le client doit recommencer toutes les opérations avec un autre standard.

Il est aussi possible de souscrire un abonnement auprès de certaines sociétés qui garantissent un service plus rapide. Cependant, ce service est naturellement très onéreux, sans compter les éventuels droits d'entrée et cotisations annuelles.

Enfin, faire appel à un chauffeur particulier présuppose de connaître son numéro de téléphone et ne garantit pas sa disponibilité. En général, il s'agit d'un chauffeur habituel et le prix du service est le plus souvent majoré.

Pour les professionnels, comme il a été indiqué, les modes opératoires rappelés ne sont pas exempts non plus d'inconvénients.

Le temps passé en station est du temps perdu, d'autant plus que la législation de certains pays (c'est le cas de la France) impose un temps de travail maximum qui englobe le temps en station. Toutes les stations ne sont pas équipées de bornes téléphoniques ce qui diminue le nombre de clients potentiels. Enfin, le professionnel, compte tenu de ce qui précède, aura tendance à refuser des courses à faible distance, jugées non rentables.

Sauf à être relié à un standard radio (ce qui n'est pas le cas de tous les taxis), le professionnel en phase finale d'une course ne peut savoir qu'un client potentiel situé à proximité cherche vainement un véhicule.

En cas d'appel radio, la communication peut être interceptée par un collègue indélicat. Le taxi peut également être victime de clients abusifs qui trouvent un autre taxi sans décommander le premier.

Si par contre, le professionnel est abonné à un standard radio, il est assujetti à de nombreuses contraintes et subit de nombreux inconvénients : prix élevé de l'abonnement, obligation de signaler régulièrement la position du véhicule, répartition des courses entre les différents taxis en cas de pénurie, obligation de rester à l'intérieur du véhicule pour intercepter les communications, contraintes d'ordres réglementaire et contractuel, non-interconnexion des différents standards (perte de clientèle potentielle), zones de réception défectueuse, etc.

Les inconvénients qui viennent d'être énoncés se retrouvent, sinon de façon identique, mais au moins de façon très similaire dans de nombreuses autres activités : dépannage automobile sur route ou voie urbaine, dépannage d'appareils ménagers à domicile, restauration rapide à domicile, etc.

L'invention vise à obvier les inconvénients qui viennent d'être rappelés et, notamment, à proposer un procédé d'appel centralisé d'accès à un service, simple et efficace, qui n'entraîne pas un surcoût, ni pour le professionnel qui le remplit, ni pour l'usager, l'art antérieur en la matière étant illustré par le document WO-A-95/35001.

Pour ce faire, l'invention tire partie de certaines particularités techniques liées aux communications téléphoniques et radiotéléphoniques à l'aide de téléphones portatifs ou mobiles. Les téléphones de ce dernier type sont désormais très répandus et accessibles pécuniairement à un grand nombre de personnes, soit à l'achat, soit via une formule d'abonnement proposée par différents opérateurs. Enfin la couverture nationale, voire internationale, des réseaux de radiotéléphonie cellulaire est devenue très complète. Ces réseaux existent dans de nombreux pays.

Dans les centraux téléphoniques modernes, notamment de type électronique, et dans les réseaux de radiotéléphonie cellulaire, il est possible de localiser rapidement, à la fois les postes appelant et les postes appelés. Dans le cas des téléphones mobiles, la commutation à l'état de veille déclenche une procédure automatique d'échange mutuel de signaux radioélectriques entre le poste portatif de l'usager et la balise d'émission-réception de la cellule dans lequel il se trouve. Cet échange est nécessaire pour qu'il y ait "accrochage" sur le réseau d'un opérateur donné auquel l'usager est abonné. En outre, il signale sa position chaque fois qu'il change de zone (cellule). Il est donc possible de localiser même un poste mobile qui n'appelle pas mais qui est activé en attente de réception.

Le procédé selon l'invention consiste à mettre en contact automatiquement, rapidement et directement un usager désireux de bénéficier d'un service et un des professionnels abonnés à ce service.

L'usager appelle un numéro unique national, voire international, propre à ce service, soit à l'aide d'un poste téléphonique fixe, soit à l'aide d'un poste mobile. L'usager est localisé par son appel téléphonique. Cet appel est transmis, par l'opérateur gestionnaire du service, à tous les professionnels précités se trouvant dans la zone géographique la plus proche de l'appelant. Il n'y a pas d'intervention humaine dans le processus, seul l'opérateur du réseau intervient par le biais d'installations automatiques : centraux, systèmes informatiques et réseaux d'émission-réception d'ondes électromagnétiques.

La seule contrainte pour le professionnel est de posséder un poste téléphonique mobile monté à bord de son véhicule et/ou, avantageusement, un poste téléphonique portatif qui l'autorise à sortir de son véhicule tout en restant à l'écoute. Pour des raisons commerciales, il est naturellement nécessaire que seuls les professionnels abonnés au service puissent être appelés. Ceci peut être résolu en équipant les postes d'une carte à puce spécifique.

Lorsqu'un professionnel présent dans la zone géographique précitée et, de surcroît disponible, reçoit un appel, il répond à cet appel. Le premier professionnel qui répond déclenche en outre l'arrêt de la transmission générale de la requête. Cette réponse le met en relation directe avec son client potentiel. S'il accepte la course, il valide la transaction auprès du gestionnaire du service.

L'invention a donc pour objet un procédé d'appel centralisé pour accéder à un service particulier sur l'étendu d'un territoire déterminé, ledit territoire étant couvert par un réseau de radiotéléphonie comportant une pluralité de cellules associées à des balises émettrices-réceptrices d'ondes radioélectriques, caractérisé en ce qu'il comprend au moins les phases suivantes :
a/ une phase d'appel par un usager désirant accéder audit service d'un numéro téléphonique déterminé, associé audit service et unique pour toute l'étendue dudit territoire déterminé ;
b/ une phase de localisation de la zone géographique d'appel dudit usager sur ledit territoire et transmission de données associées à cette localisation à un opérateur gestionnaire dudit service particulier ;
c/ une phase d'émission par ledit opérateur d'un appel général, via ledit réseau de radiotéléphonie cellulaire, destiné à des prestataires dudit service particulier situés dans une zone la plus proche de ladite zone géographique d'appel et se trouvant dans un état dit de disponibilité ;
d/ une phase d'acceptation dudit appel général par un desdits prestataires du service particulier, dans ledit état de disponibilité, ladite acceptation provoquant l'arrêt de l'émission de l'appel général sur détection de celle-ci par l'opérateur ;
e/ une phase de mise en communication téléphonique directe, par ledit opérateur, entre ledit usager appelant et ledit prestataire du service particulier ayant accepté ledit appel général ;
f/ une phase final d'arrêt, sur détection par ledit opérateur de ladite validation, par ledit prestataire, de la transaction entamée avec l'usager appelant ;
g/ et une phase optionnelle de réitération des phases d/ à f/ en cas de non-validation de ladite transaction, jusqu'à validation effective de celle-ci ou abandon de l'appel initié par ledit usager.

L'invention a encore pour objet un système pour la mise en oeuvre d'un tel procédé.

L'invention a encore pour objet l'application du procédé à l'appel centralisé de taxis.

L'invention sera mieux comprise et d'autres caractéristiques et avantages apparaîtront à la lecture de la description qui suit en référence aux figures annexées, et parmi lesquelles :
- La figure 1 illustre schématiquement un exemple d'architecture simplifiée d'un système de mise en oeuvre d'un procédé d'appel centralisé d'un service selon l'invention, dans l'application "appel de taxis" ;
- La figure 2 est un diagramme temporel illustrant les principales phases d'une transaction entre un usager et un professionnel abonné au service ;
- Les figures 3a et 3b sont des diagrammes explicitant les principales étapes du procédé du côté professionnel et du côté opérateur, gestionnaire du système, respectivement ;
- La figure 4 illustre schématiquement les différentes possibilités offertes par le procédé de l'invention, dans le cadre d'une architecture de système plus complète que celle de la figure 1 ;
- La figure 5 illustre un exemple de borne d'appel de taxis, utilisable dans les systèmes selon l'invention.

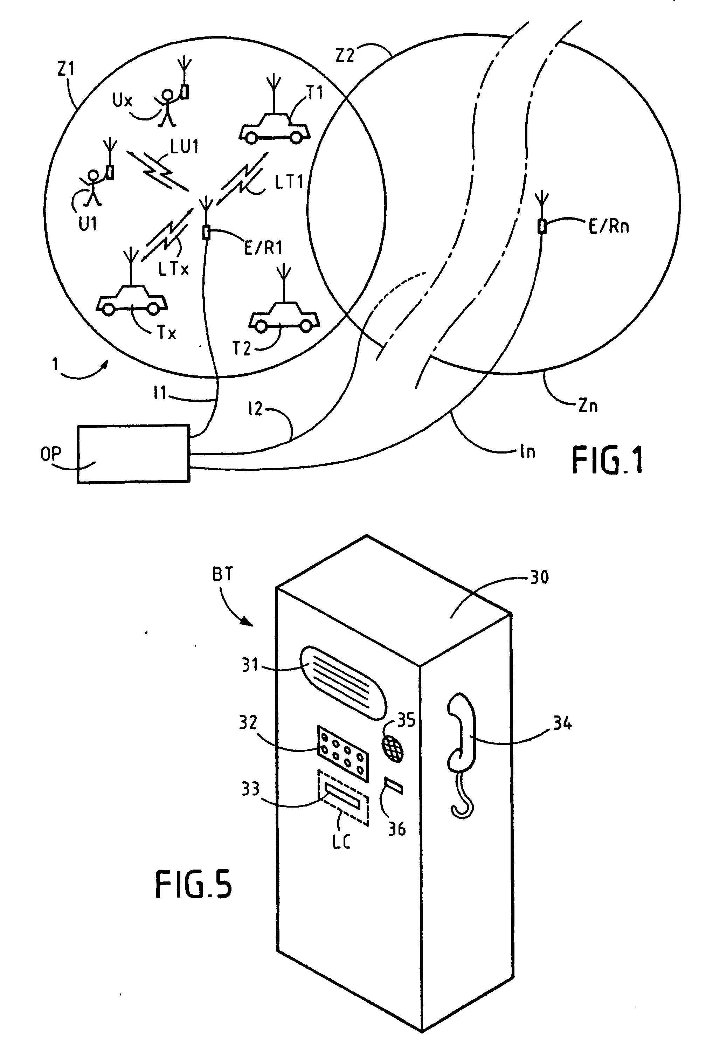

On va maintenant illustrer le procédé de l'invention, dans l'application préférée "appel de taxis", en se référant à un exemple d'architecture simplifiée de système de mise en oeuvre de ce procédé. La figure 1 illustre un tel système.

On suppose que l'opérateur OP du réseau de radiotéléphonie est également l'opérateur gestionnaire du service d'appel centralisé de taxis. On suppose aussi, dans l'exemple illustré, que tous les intervenants communiquent à l'aide de téléphones mobiles ou portables. Il s'agit des professionnels abonnés au service : les taxis T₁ à Tₓ, et des clients potentiels, les usagers U₁ à Uₓ.

Le réseau de radiotéléphonie est un réseau cellulaire : cellules ou zones Z₁ à Zₙ, par exemple à la norme GSM. Chaque zone comprend une balise émettrice /réceptrice, E/R₁ à E/Rₙ, communiquant, de façon classique, avec le central de l'opérateur OP du réseau, par des liaisons bidirectionnelles, *l*_{*l*} à *l*_{*n*}. La nature de ces liaisons peut être quelconque : faisceaux hertziens, etc.

Lorsqu'un des téléphones portatifs ou mobiles de la zone géographique Z₁ est activé (mise en veille), même s'il n'y a pas appel (émission) ou réception, une procédure de reconnaissance mutuelle et d'accrochage au réseau de radiotéléphonie est initiée par échange de signaux codés (liaison radio bidirectionnelle). Dans l'exemple illustré, on suppose que les taxis T₁ et Tₓ sont disponibles et ont activé leurs téléphones mobiles : liaisons LT₁ et LTₓ. L'opérateur OP, par le biais des signaux reçus de la balise E/R₁ est donc en mesure de les localiser, du moins de déterminer que ces taxis sont dans la zone géographique Z₁.

Si l'usager U1 compose le numéro unique d'appel du service, son poste portatif va établir également une liaison bidirectionnelle entre la balise E/R₁ et l'appel va être retransmis au central de l'opérateur OP par la liaison *l*₁, c'est-à-dire dans la pratique à un système électronique de traitement de données qui va localiser la zone géographique de l'appel, en l'occurrence la zone Z₁.

L'opérateur initialise un appel général de tous les professionnels de la zone géographique Z₁. Seuls vont être atteints par l'appel les professionnels qui répondent à la double condition suivante : abonnés au service particulier et disponibles. L'état de disponibilité est déterminé simplement par l'activation de l'appareil téléphonique. Pour que seuls les abonnés reçoivent l'appel d'un opérateur particulier OP, il suffit que les appareils soient dotés d'une carte à puce spécifique reconnaissant un code particulier propre au service. Pour mémoire, les postes portatifs ou mobiles fonctionnent en coopération avec un module ou une carte à puce d'identification personnelle, dite "SIM", qui détermine les conditions de fonctionnement de l'appareil, le ou les réseaux auxquels l'utilisateur à accès, le ou les types de services auxquels il a droit et leurs modalités. On comprend aisément que l'ajout d'un service spécifique ne nécessite pas de modifications importantes. Il suffit, par exemple, de modifier le programme enregistré dans la mémoire de la puce électronique intégrée dans la carte. L'accès au service spécifique par le professionnel peut être activé simplement en actionnant une touche ou une combinaison de touches particulières sur le clavier de l'appareil. Le code correspondant est reconnu par les circuits de traitement de l'information de la puce et l'appareil téléphonique est autorisé à accéder au service, en émission et en réception.

La carte à puce spécifique permet aussi l'utilisation de l'appareil téléphonique pour un usage courant (appels téléphoniques personnels, etc.), c'est-à-dire hors service spécifique. L'appareil téléphonique n'est donc opérationnel pour ce dernier, que s'il est activé (état de veille) et que si l'actionnement de touches précité a été effectué. Une opération similaire permet au professionnel de se déconnecter du service spécifique, tout en laissant son appareil téléphonique à l'état de veille, c'est-à-dire apte à recevoir des communications hors service spécifique.

Pour l'usager, une carte à puce spécifique particulière n'est pas obligatoire, sauf si le service est soumis à abonnement.

Le premier professionnel qui répond à l'appel général, par exemple le taxi T₁, occasionne l'interruption de cet appel général. Son appel est reçu par le système électronique de traitement de données de l'opérateur OP via la balise E/R₁ et la liaison *l*₁ qui effectue cette opération et le met en liaison directe avec l'appelant localisé, l'usager U₁.

Si à l'issue de la transaction amorcée entre le taxi T1 et l'usager U₁, il se dégage un accord sur la course à effectuer, le taxi T₁ valide cette transaction. Cela peut s'effectuer simplement, par exemple par l'actionnement d'une touche ou d'une combinaison de touches particulières sur le clavier de l'appareil. Cette validation met fin au processus de communication.

Suite à la validation précitée, le système informatique de l'opérateur OP peut enregistrer des données particulières sur la transaction : date, heure, professionnel concerné, etc. Ces données pourront servir à la facturation du professionnel abonné ou de l'entreprise dont il dépend. Elles peuvent servir également en cas de contestations du client : accord non honoré, etc.

Si le professionnel et le client ne peuvent se mettre d'accord, le professionnel raccroche. Sur cette détection, l'appel de l'usager U₁ est rebasculé dans le réseau et l'appel général dans la zone Z₁ est réactivé jusqu'à ce qu'un professionnel décroche. Le cycle précédemment décrit recommence.

Avantageusement, si la localisation exige du temps, par exemple plusieurs secondes, l'usager appelant peut être basculé temporairement sur une messagerie vocale d'attente.

Naturellement, le processus qui vient d'être décrit pour la zone Z₁, se déroule de façon identique, quelle que soit la zone considérée, Z₁ à Zₙ.

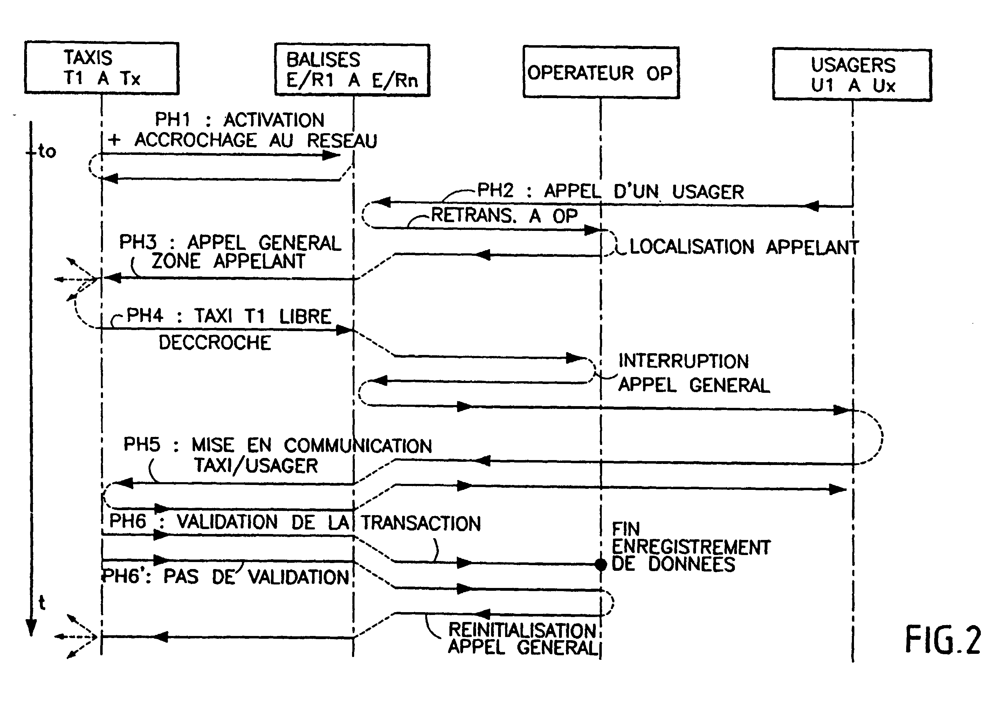

Les principales phases de la transaction qui vient d'être décrite sont résumées ci-après, par référence au diagramme temporel de la figure 2.

Sur la partie haute du diagramme, on a représenté les entités intervenant dans la transaction : les taxis T₁ à Tₓ (dans chaque zone), les balises E/R₁ à E/Rₙ, l'opérateur OP et les usagers U₁ à Uₓ (dans chaque zone).

Pendant la phase 1, à l'instant t = t₀ (PH₁, sur la figure 2), un certain nombre de professionnels abonnés au service et disponibles activent leur appareil téléphonique pour avoir accès au service. Il y a reconnaissance et accrochage sur le réseau, par exemple sur la balise E/R₁ pour le taxi T₁.

Pendant la phase (PH₂), un usager, par exemple U₁ dans la zone Z₁, appelle le service (c'est-à-dire l'opérateur gestionnaire OP) via la balise E/R₁ dont il dépend. Le système de traitement de l'information de l'opérateur OP localise l'appelant U₁.

Pendant la phase 3 (PH₃), l'opérateur OP initialise un appel général dans la zone géographique de l'appelant, en l'occurrence Z₁, via la balise E/R₁.

Pendant la phase 4 (PH₄), un taxi disponible, par exemple T₁, décroche. La communication est transmise à l'opérateur OP via la balise E/R₁. L'opérateur interrompt l'appel général.

Pendant la phase 5 (PH₅), l'opérateur OP met en communication directe l'usager appelant, U₁ et le premier taxi qui a décroché, T₁.

A la suite de la communication téléphonique, deux cas peuvent se rencontrer :
a/ Le taxi T₁ et son client potentiel, l'usager U₁, se sont mis d'accord sur la course à effectuer et le taxi valide la transaction (transaction OK) : phase 5 (PH₅), par activation de touches prédéterminées, ce qui occasionne l'envoi d'un code particulier. A l'issue de cette phase, la transaction est considérée comme terminée et le système informatique de l'opérateur OP peut enregistrer dans ses mémoires des données caractérisant celle-ci. Si la validation précitée n'est pas effectuée par le taxi T₁, le fait que l'usager U₁ raccroche met fin de toute façon à la transaction.
b/ Le taxi T₁ n'accepte pas la course et raccroche : phase 6 bis (PH_{6'}). Si l'usager U₁ ne raccroche pas, cet état est détecté par le système informatique de l'opérateur OP. La communication de l'appelant U₁ est rebasculée sur le réseau et l'appel général réinitialisé. Le cycle reprend à la phase 3.

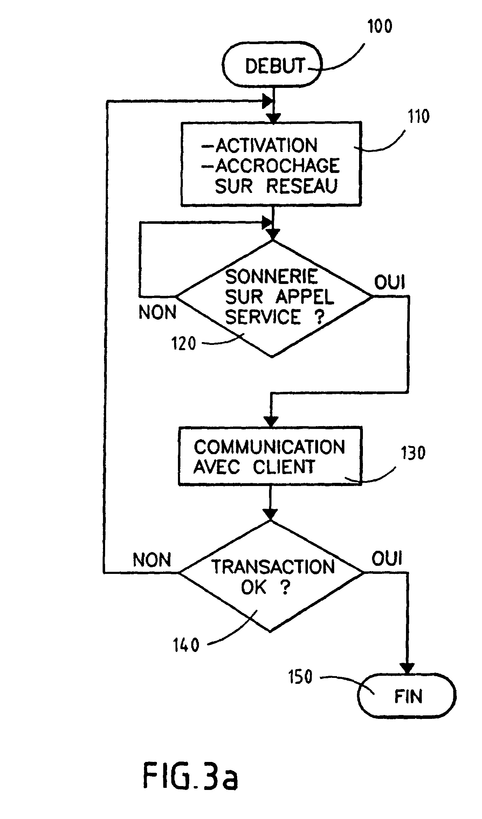

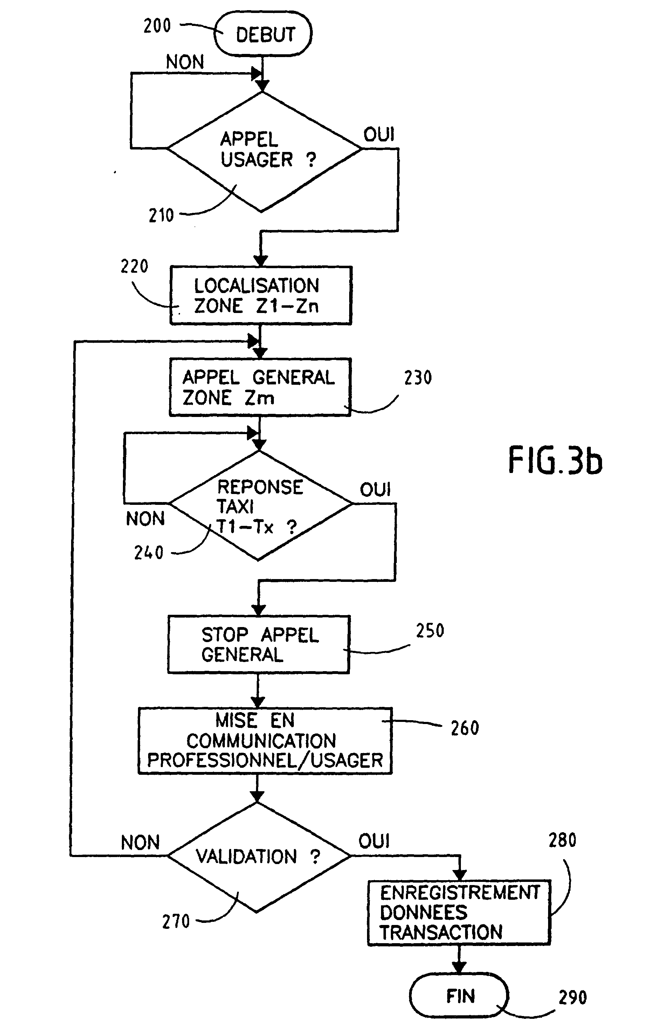

Les figures 3a et 3b sont des organigrammes illustrant les principales étapes du procédé, côté professionnels et côté opérateur, respectivement.

Sur la figure 3a, on a représenté le début des opérations sous la référence 100, la première étape, 110, consistant à l'activation des appareils téléphoniques d'un ou plusieurs taxis, T₁ à Tₓ, sur le service spécifique.

À la deuxième étape, 120, les appareils téléphoniques activés ont en boucle d'attente d'un appel général (sonnerie) sur le service (pas d'appel : branche NON ; appel reçu : banche OUI).

Sur réception d'un appel de service, l'étape suivante, 130, est la mise en communication directe avec un client potentiel, l'usager appelant (par exemple U₁ : figure 1).

L'étape suivante, 140, est la validation (branche OUI : "transaction OK") ou non (branche NON) de la transaction entamée. Si oui, la transaction est terminée : étape FIN, 150. A priori, le taxi concerné désactive son appareil téléphonique, du moins en ce qui concerne le service spécifique. Dans le cas contraire, le processus recommence à l'étape 110.

Sur la figure 3b, on a représenté le début des opérations sous la référence 200. La première étape, 210, consiste en une boucle d'attente (branche NON) d'un appel d'usager. Si un appel est détecté (branche OUI), l'étape suivante, 220, est une étape de localisation de l'usager appelant (par exemple U₁), dans l'une des zones géographiques Z₁ à Zₙ.

Lorsque l'appelant est localisé, par exemple dans la zone Zₘ, un appel général est effectué dans cette zone : étape 230.

L'étape suivante, 240, consiste en une boucle d'attente (branche NON) jusqu'à ce qu'un taxi disponible décroche (branche OUI) et en la détection de cet état.

Sur cette première disponibilité, l'étape suivante, 250, est réalisée : arrêt de l'appel général.

L'étape suivante, 260, consiste en la mise en communication directe de l'appelant et du taxi qui a décroché.

L'étape suivante, 270, consiste en la validation de la transaction taxi-client.

Sur détection de cette validation (branche OUI), le processus passe à une étape, 280, d'enregistrement de données caractérisant la transaction écoulée. Dans le cas contraire (branche NON), le processus recommence à l'étape 230 : l'appel général dans la zone Zₘ est réinitialisé.

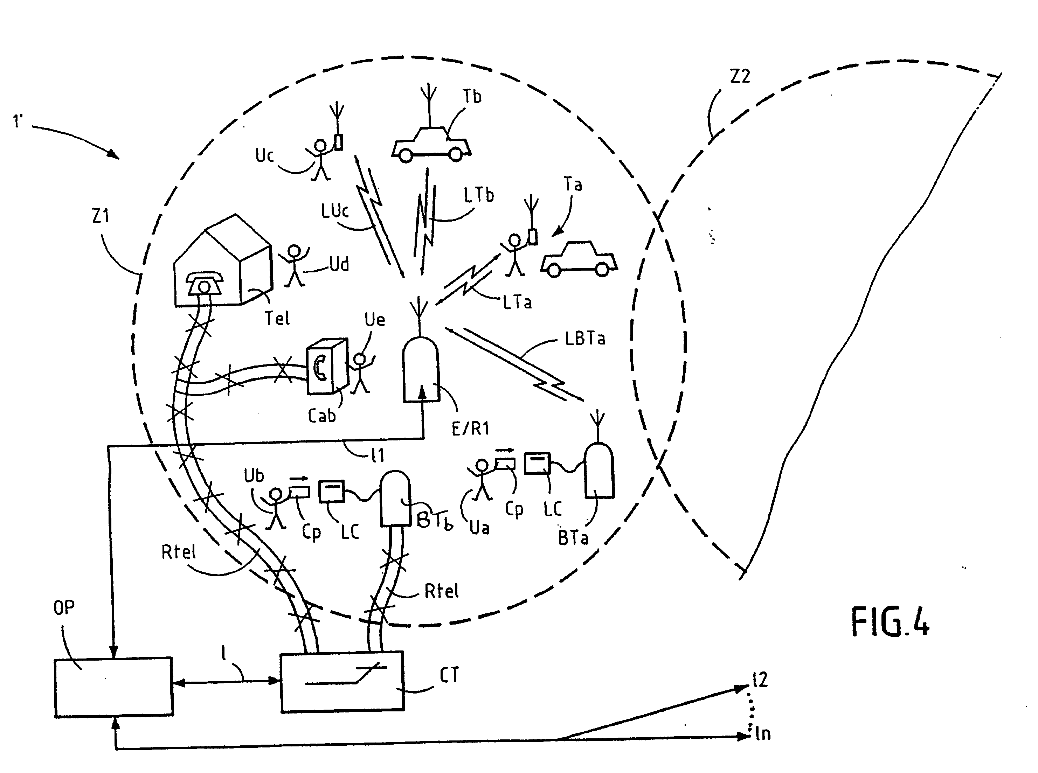

On va maintenant décrire un exemple plus complet d'architecture d'un système 1', pour la mise en oeuvre du procédé selon l'invention en regard de la figure 4. Sur cette figure, on a représenté des possibilités supplémentaires de communications entre taxis, ou de façon plus générale de professionnels abonnés à un service, et usagers de ce service. Sur cette figure 4, pour ne pas surcharger le dessin, on n'a détaillé qu'une seule zone géographique, Z₁, étant entendu que l'équipement des autres zones, Z₂ à Zₙ, est a priori identique à celui de la zone Z₁.

Comme précédemment, un utilisateur, référencé U_{c}, muni d'un poste téléphonique portatif peut émettre un appel via un lien de radiotransmission bidirectionnel LU_{c}. Cet appel est intercepté par la borne émettrice/réceptrice E/R₁ de la zone géographique, Z₁, dont il dépend. Cet appel est traité de la façon qui vient d'être décrite. De même, le taxi T_{b}, muni d'un poste téléphonique mobile, monté à bord de son véhicule est en relation, via un lien de radiotransmission bidirectionnel, LT_{b}, avec la même borne émettrice/réceptrice, E/R₁.

Comme il a été indiqué, le poste téléphonique peut être d'un type portatif, tenant dans la poche, ce qui permet au chauffeur du taxi Tₐ de s'éloigner de son véhicule. Il est relié à la même borne émettrice/réceptrice, E/R₁, via un lien de radiotransmission bidirectionnel, LTₐ.

Selon une variante supplémentaire de l'invention, on prévoit des bornes d'appel de taxis munies d'un lecteur de carte à puce.

La figure 5 illustre schématiquement un exemple de réalisation d'une telle borne BT. Elle comprend un châssis de forme appropriée 30, pouvant avantageusement servir de mobilier urbain et supportant éventuellement des logos, signes divers, plans urbains, ou des inscriptions publicitaires ou autres.

On peut d'ailleurs avantageusement utiliser l'infrastructure générale d'une borne d'appel classique, telle qu'elle existe en tête de certaines stations de taxis, en y apportant les modifications ci-après.

Selon une caractéristique spécifique à l'invention, la borne BT comprend un lecteur de carte LC, dont on a représenté la fente d'introduction 33. La carte à puce ne nécessite pas d'être spécifique. On peut utiliser, par exemple, une carte téléphonique ou bancaire classique, munie ou non d'une puce. Une piste magnétique est suffisante, comme dans le cas des distributeurs automatiques de billets des guichets automatiques de banque ("DAB" ou "GAB").

Pour des raisons de sécurisation de la transaction, il est utile de prévoir, comme dans le cas des distributeurs ou guichets automatiques précités, un clavier 32, pour entrer un code personnel identifiant le porteur de carte et un organe de visualisation 31, à l'aide de moyens électroniques classiques (non représentés). En outre, le clavier 32 et l'écran 31 peuvent être utilisés en coopération pour informer et guider un utilisateur potentiel, par exemple en lui indiquant la marche à suivre pour appeler un taxi ou, de façon plus générale, pour accéder à un service particulier.

En effet, cette borne d'appel peut être utilisée non seulement pour l'appel de taxis, mais pour d'autres services éventuels : dépannages, etc. De plus, elle peut être disposée en tous endroits stratégiques (gares, marchés, lieux touristiques, centres commerciaux, etc.), et non plus seulement en tête de stations de taxis, puisque le numéro d'appel,est unique, pour un service spécifique donné. Le choix entre divers services, si la borne le permet, peut s'effectuer simplement par l'actionnement d'une touche ou d'une combinaison de touches particulière, éventuellement avec l'aide d'informations affichées sur l'écran 31 et/ou d'informations de guidage sonores, diffusées par un haut-parleur auxiliaire 35. Cette dernière modalité permettrait l'utilisation de la borne d'appel BT par des non voyants.

En outre, si le service est soumis à abonnement, on peut exiger, soit que l'usager possède une carte à puce spécifique donnant accès à cet abonnement, soit qu'il frappe un code d'identification transmis à l'opérateur OP, en faisant usage du clavier 32, sous la conduite éventuelle d'instructions affichées sur l'écran 31.

Une fois la carte introduite dans le lecteur et la procédure d'identification éventuelle du porteur effectuée, la phase de localisation de la borne BT est initialisée, d'une manière similaire à ce qui a été précédemment décrit. Il n'est pas nécessaire de composer un numéro d'appel à l'aide du clavier 31, puisque l'introduction validée de la carte (figure 4 : CP) est sans équivoque sur l'intention de l'usager d'avoir accès à un service particulier, service qu'il a sélectionné (s'il y a choix) ou au service unique associé à la borne BT (par exemple l'appel de taxis). Lorsqu'un taxi disponible dans la même zone géographique, c'est-à-dire Z₁ dans l'exemple, a répondu à l'appel, il est mis en communication téléphonique directe avec l'usager appelant.

Celui-ci se sert d'un combiné téléphonique 34, éventuellement relayé, en écoute, par le haut-parleur auxiliaire 35, s'il existe. Dans un autre mode de réalisation, l'organe 35 peut être remplacé par un dispositif électroacoustique jouant le rôle de haut-parleur et de microphone. Étant, *a priori,* intégré dans le châssis de la borne BT, il sera moins sensible à des dégradations éventuelles : vandalisme, intempéries, etc., qu'un combiné séparé, 34.

Lorsque la transaction entre le chauffeur de taxi (ou le prestataire d'un autre service) et l'usager s'est terminée sur un accord, l'usager raccroche, ce qui met fin au processus d'appel. Dans le cas contraire, l'usager ne raccroche pas et la recherche d'un autre taxi est initiée, comme il a été indiqué.

On peut avantageusement prévoir l'impression d'un ticket à l'aide d'un dispositif d'impression, 36, similaire à ceux utilisés dans les distributeurs de billets. Le ticket pourra comprendre des données d'horodatage et des données indiquant le lieu d'appel. En outre, puisque le professionnel ayant répondu à l'appel utilise une carte à puce spécifique, il est possible d'en dériver, lors de la communication, des données ou un code permettant son identification. Ces données, ainsi que les autres informations imprimées sur le ticket, pourront être utilisées en cas de contestation, par exemple si le taxi n'a pas tenu son engagement et ne s'est pas présenté pour effectuer la course.

De façon similaire, des données dérivées de l'identification du porteur de carte pourront être transmises à l'opérateur OP. Naturellement, des précautions devront être prises pour garantir la confidentialité des informations transmises, notamment pour certains types de services. Pour ce faire, il peut être nécessaire de chiffrer les données avant transmission.

On a représenté sur la figure 4 un exemple d'une borne d'appel BTₐ, reliée à la borne d'émission-réception, E/R₁, par une liaison de radiotransmission bidirectionnelle, LBTₐ. La localisation de la borne d'appel BTₐ s'effectue de façon strictement identique à ce qui a été précédemment décrit.

Si on considère que la borne BTₐ est une borne de tête de station, le procédé de l'invention permet une fonction supplémentaire. Celle-ci étant munie d'un émetteur, celui-ci peut également être utilisé pour émettre un message particulier, à destination des taxis situés dans une zone proche de la borne BTₐ. L'émission est initialisée par l'appel d'un usager désirant un taxi, comme décrit ci-dessus. En effet, si l'usager est obligé d'utiliser la borne, cela signifie qu'il n'y a pas, *a priori*, de taxis présents. Un taxi libre, se trouvant à proximité de la borne BTₐ émettant le message précité, a donc une bonne probabilité de trouver rapidement un client.

Jusqu'à présent, on a considéré que les liaisons des usagers avec les bornes émettrices-réceptrices et l'opérateur étaient effectuées par radiotransmission.

Cependant, l'invention autorise d'autres modes de transmission, et notamment la téléphonie terrestre classique, ce qui peut s'avérer intéressant, en particulier en milieu urbain. L'usager n'est plus tenu de disposer d'un téléphone portatif. L'avantage principal offert par le procédé de l'invention, c'est-à-dire l'appel par un numéro unique, est cependant conservé, comme décrit ci-après.

La borne d'appel BT_{b} illustre une variante dans laquelle la liaison avec l'opérateur est effectuée par une ligne téléphonique classique d'un réseau terrestre Rtel, jusqu'à un central téléphonique CT. À l'exception de cette disposition, la borne d'appel BT_{b} peut être réalisée de façon identique à la borne d'appel BTₐ. Ces deux bornes comportent tout ou partie des organes décrits en regard de la figure 5 (borne d'appel BT), notamment un lecteur de carte LC et des moyens de communication acoustique (figure 5 : 34 et/ou 35).

On a supposé sur la figure 4 que les installations de l'opérateur OP du réseau de radiotransmission cellulaire étaient distinctes de celles du central téléphonique CT. Dans ce cas, on prévoit une liaison bidirectionnelle appropriée 1 entre ces deux installations : liaison téléphonique, RNIS, faisceau hertzien, etc.

Enfin, selon un autre aspect avantageux du procédé de l'invention, un usager n'est obligé, ni d'avoir recours à une borne d'appel, ni de posséder un appareil téléphonique transportable. Seul le professionnel abonné au service doit posséder un tel appareil téléphonique, ce qui ne constitue pas une contrainte importante.

Il est en effet possible, comme le montre la figure 4, d'utiliser un téléphone classique fixe ou du type sans fil, Tel. L'appel peut être effectué, par exemple, depuis le domicile (usager U_{d}), ou encore depuis une cabine téléphonique, Cab (usager Uₑ).

Comme précédemment, si le service est soumis à abonnement, l'usager, U_{d} ou Uₑ, devra entrer sur le clavier de l'appareil téléphonique, Tel ou Cab, un code particulier d'identification transmis à l'opérateur OP, via le central CT.

Dans tous les cas, la localisation peut être effectuée par le central téléphonique CT ou l'opérateur OP, de façon encore plus précise que la localisation d'un appareil téléphonique portatif, puisque, *a priori*, à un abonnement téléphonique donné est associé un ou plusieurs numéros de téléphone et, de ce fait, un ou plusieurs lieux précis. La technologie actuelle permettant d'identifier un numéro d'appel, il est possible d'effectuer une corrélation entre ce numéro et la cellule du réseau de radiotéléphonie la plus proche du lieu d'appel. Les appels des usagers pour un service spécifique et les données de localisation sont transmis à l'opérateur OP de ce service, via la liaison 1.

À l'exception du type de liaison usager-opérateur et du mode opératoire de localisation sur un réseau de téléphonie terrestre particulier, toutes les autres opérations sont identiques à ce qui a été décrit et il est inutile de les rappeler en détail. Notamment une fois l'appel d'un usager localisé, par exemple l'usager Uₑ situé dans la zone Z₁, un appel général est initié dans cette zone Z1. Une fois qu'un taxi disponible aura décroché, par exemple le taxi T_{b}, il est mis en communication téléphonique directe avec l'appelant, Uₑ, via la liaison LT_{b}, la borne émettrice-réceptrice E/R₁, la liaison *l*₁, l'installation de l'opérateur OP, la liaison *l* et le réseau téléphonique terrestre, Rtel.

A la lecture de ce qui précède, on constate aisément que l'invention atteint bien les buts qu'elle s'est fixés.

Le procédé présente de nombreux avantages parmi lesquels :
. Il est simple d'utilisation.
. L'usager ne doit notamment connaître qu'un seul numéro de téléphone national, voire international. Ce numéro peut être un numéro abrégé ou, pour le moins, un numéro simple à mémoriser, ce quel que soit l'endroit où il se trouve.
. L'appel atteint les professionnels les plus proches du lieu d'appel et l'usager converse directement avec le premier professionnel ayant répondu, qui *a priori* est disponible puisqu'il a activé son appareil portatif.
. Les temps d'attente sont réduits, même en période de pointe, et le coût de la course est, en moyenne, réduit, puisque c'est un taxi proche du lieu d'appel qui va effectuer la course.
. Même pour une course très courte, un chauffeur de taxi sera moins enclin à la refuser, car non rentable dans un mode opératoire classique.
. Il n'est plus nécessaire de souscrire à un abonnement onéreux.

Pour le professionnel, les contraintes sont réduites au minimum : possession d'un appareil mobile ou portable, muni d'une carte à puce spécifique. Par contre, les avantages sont nombreux.

Si l'appareil n'est pas monté de façon fixe à bord du véhicule, le chauffeur n'est plus lié à ce dernier. Il peut l'utiliser pour un usage courant ou pour sa clientèle privée. Un code peut être affiché sur l'écran pour indiquer si c'est un appel privé ou en provenance de l'opérateur du service. Le professionnel n'est alors pas obligé de se déconnecter du service, même s'il n'est pas libre. En effet, il suffit de ne pas décrocher lors d'un appel général du service. Il n'est pas non plus obligé d'attendre son tour à une station de taxi, et il peut ainsi circuler dans des zones où les clients potentiels sont nombreux. Il recevra tous les appels en provenance de cette zone. Dans la phase terminale d'une course, il peut accepter une course pour un nouveau client avant même d'avoir déposé le client précédent, quand notamment le nouveau client se trouve dans une zone proche. Les temps morts sont donc réduits au minimum.

Le risque qu'un autre taxi peu scrupuleux effectue la course commandée à sa place est très réduit car, selon l'une des caractéristiques du procédé, seul le premier taxi qui décroche est mis en communication avec l'usager appelant, les autres taxis n'entendant pas la conversation.

Outre une rentabilité améliorée (moins de courses à vide, possibilité d'accepter les petits trajets, moins de temps perdu en attente aux stations, etc.), le professionnel encourt moins de frais : plus d'abonnement très onéreux à un standard spécialisé, moins de pertes dues à la non-interconnexion entre les différents standards, etc.

De façon plus générale, l'adéquation entre les demandes et besoins des usagers et l'offre, c'est-à-dire essentiellement la disponibilité rapide d'un taxi, est améliorée. Enfin, les problèmes de pollution et les difficultés liées à la circulation, notamment en milieu urbain, incitent de plus en plus d'usagers à utiliser le taxi comme moyen de locomotion, l'invention permet, à la fois, d'augmenter la disponibilité et, corrélativement, de diminuer coût.

Il doit être clair cependant que l'invention n'est pas limitée aux seuls exemples de réalisations précisément décrits, notamment en relation avec les figures 1 à 5.

Notamment, à l'exception des liaisons entre les professionnels et l'opérateur, qui nécessitent que les professionnels utilisent un appareil téléphonique portatif ou mobile, les communications entre les usagers potentiels du service et l'opérateur peuvent mettre en oeuvre des liaisons de radiotéléphonie (avec usage d'un appareil téléphonique portatif également), des liaisons téléphoniques classiques ou tout autre type de liaison. Par exemple, les bornes d'appel peuvent être reliées entre elles et/ou avec l'opérateur par liaison optique à fibre optique, par liaison à coaxial, etc. Les liaisons peuvent s'effectuer enfin par l'intermédiaire de satellites et mettre en oeuvre la technologie "GPS".

Il doit être clair enfin que, bien que particulièrement adaptée à l'appel centralisé de taxis par un numéro unique, on ne saurait cantonner l'invention à ce seul type d'application. Elle s'applique tout aussi bien à de nombreux autres services : dépannage d'appareils ménager, dépannage de véhicules, services de médecins de garde ou vétérinaires, services de transport routier nationaux et, éventuellement, internationaux, etc. Si plusieurs services sont accessibles, il suffit de disposer d'un numéro associé à chaque service. L'avantage principal du procédé selon l'invention est conservé, car ce numéro, pour un service donné, reste unique sur un territoire donné, national ou international, selon la couverture du service précité.

## Revendications

1. Procédé d'appel centralisé pour accéder à un service particulier sur l'étendue d'un territoire déterminé, ledit territoire étant couvert par un réseau de radiotéléphonie comportant une pluralité de cellules (Z₁ à Zₙ) associées à des balises émettrices-réceptrices (E/R₁ à E/Rₙ) d'ondes radioélectriques, comprenant au moins les phases suivantes :
a/ une phase d'appel par un usager (U₁) désirant accéder audit service d'un numéro téléphonique déterminé, associé audit service et unique pour toute l'étendue dudit territoire déterminé ;
b/ une phase de localisation de la zone géographique d'appel dudit usager (U₁) sur ledit territoire et transmission de données associées à cette localisation à un opérateur (OP) gestionnaire dudit service particulier ;
c/ une phase d'émission par ledit opérateur d'un appel général, via ledit réseau de radiotéléphonie cellulaire, destiné à des prestataires (T₁ à Tₓ) dudit service particulier situés dans une zone (Z₁) la plus proche de ladite zone géographique d'appel et se trouvant dans un état dit de disponibilité ;
d/ une phase d'acceptation dudit appel général par un desdits prestataires (T₁) du service particulier, dans ledit état de disponibilité, ladite acceptation provoquant l'arrêt de l'émission de l'appel général sur détection de celle-ci par l'opérateur (OP) ;
e/ une phase de mise en communication téléphonique directe, par ledit opérateur (OP), entre ledit usager appelant (U₁) et ledit prestataire (T₁) du service particulier ayant accepté ledit appel général ;
f/ une phase finale d'arrêt, sur détection par ledit opérateur (OP) de ladite validation, par ledit prestataire (T₁), de la transaction entamée avec l'usager appelant;
g/ et une phase optionnelle de réitération des phases d/ à f/ en cas de non-validation de ladite transaction, jusqu'à validation effective de celle-ci ou abandon de l'appel initié par ledit usager (U₁).

2. Procédé selon la revendication 1, **caractérisé en ce que** lesdits prestataires du service particulier (T₁ à Tₓ) étant munis d'un appareil téléphonique portatif ou mobile, il comprend une phase préliminaire d'accrochage sur une desdites balises émettrices-réceptrices (E/R₁) d'une desdites cellules du réseau de radiotéléphonie et d'émission d'un code déterminé, de manière à positionner ledit appareil téléphonique portatif ou mobile audit état de disponibilité, et **en ce que** ladite phase de validation est obtenue par l'émission, à partir dudit appareil téléphonique d'un code particulier et sa transmission audit opérateur (OP).

3. Procédé selon l'une des revendications 1 ou 2, **caractérisé en ce qu'**il comprend, après ladite phase de validation de la transaction entre ledit usager appelant (U₁) et ledit prestataire (T₁) du service particulier, une phase supplémentaire d'enregistrement, par ledit opérateur (OP), de données associées à ladite transaction validée.

4. Procédé selon l'une quelconque des revendications 1 à 3, **caractérisé en ce que** ledit appel par un usager (U_{c}, U₁) dudit numéro téléphonique unique s'effectue par la composition dudit numéro sur un appareil téléphonique portable, de manière à appeler ledit opérateur (OP) via une balise émettrice-réceptrice (E/R₁) d'une desdites cellules (Z₁) du réseau de radiotéléphonie, et **en ce que** ladite phase de localisation s'effectue par détermination de la zone couverte par cette balise émettrice-réceptice (E/R₁).

5. Procédé selon l'une quelconque des revendications 1 à 3, **caractérisé en ce que** ledit appel par un usager (U_{d}, Uₑ) dudit numéro téléphonique unique s'effectue par la composition dudit numéro par un appareil téléphonique (Tel, Cab) relié à un réseau téléphonique terrestre (Rtel) et à un central téléphonique (CT) en communication avec ledit opérateur, **en ce que** ladite phase de localisation s'effectue par la détermination, par ledit central téléphonique (CT), du numéro appelant et de l'emplacement géographique dudit appareil téléphonique (Tel, Cab) qui lui est associé, et **en ce que** ladite phase d'appel générale consiste à émettre ledit appel général dans la cellule (Z₁) dudit réseau de radiotéléphonie la plus proche dudit emplacement géographique.

6. Procédé selon l'une quelconque des revendications 1 à 3, **caractérisé en ce que** ledit appel par un usager (Uₐ, U_{b}) dudit numéro téléphonique unique s'effectue en introduisant une carte à puce (CP) dans un lecteur de carte (LC) associé à une borne d'appel téléphonique (Btₐ, BT_{b}) reliée audit opérateur (OP), ledit appel d'usager (Uₐ, U_{b}) étant déclenché par la reconnaissance d'informations déterminées enregistrées dans ladite carte à puce (CP), **en ce que** ladite phase de localisation s'effectue par détermination de l'emplacement géographique de ladite borne d'appel (Btₐ, BT_{b}), et **en ce que** ladite phase d'appel générale consiste à émettre ledit appel général dans la cellule (Z₁) dudit réseau de radiotéléphonie la plus proche dudit emplacement géographique.

7. Système (1, 1') pour la mise en oeuvre du procédé selon l'une quelconque des revendications précédentes, **caractérisé en ce qu'**il comprend un réseau de radiotéléphonie cellulaire couvrant ledit territoire déterminé et le divisant en une pluralité de cellules, des moyens électroniques de traitement de l'information (OP) pour la gestion dudit réseau de radiotéléphonie cellulaire adressables par ledit numéro unique d'appel, des moyens d'appel et de communication téléphoniques (BTₐ, BTb, Cab, Tel) permettant à au moins un desdits usagers (Uₐ à Uₑ) de composer ledit numéro unique d'appel et des moyens d'appel et de communication téléphoniques à la disposition desdits prestataires (Tₐ, T_{b}) dudit service particulier, **en ce que** ces derniers moyens (Tₐ, T_{b}) comprennent des appareils téléphoniques portables ou mobiles, communiquant avec ledit réseau de téléphonie cellulaire, chaque appareil comportant des moyens pour activer sélectivement ledit service particulier et une carte à puce spécifique autorisant le fonctionnement pour ledit service particulier, **en ce que** lesdits moyens électroniques de traitement de l'information (OP) comprennent des dispositifs pour localiser l'origine géographique d'un appel d'usager (Uₐ à Uₑ), des dispositifs coopérant avec ledit réseau de téléphonie cellulaire pour initialiser un appel général desdits prestataires (Tₐ, T_{b}) du service particulier dans la cellule (Z₁) la plus proche de ladite origine géographique, pour détecter l'acceptation de l'appel général par un desdits prestataires (Tₐ, T_{b}) du service particulier, arrêter sur cette détection l'appel général et mettre en communication téléphonique directe les moyens d'appel et de communication téléphoniques dudit usager (Uₐ à Uₑ) et ceux dudit prestataire (Tₐ, T_{b}) du service particulier ayant accepté l'appel général, via ledit réseau de téléphonie cellulaire, de manière à initialiser une transaction, des dispositifs pour mettre fin à ladite transaction sur détection de la validation de celle-ci par ledit prestataire (Tₐ, T_{b}) du service particulier ou pour initialiser un nouvel appel général sur détection de sa non-validation, et des dispositifs pour enregistrer des données associées à ladite transaction.

8. Système selon la revendication 7, **caractérisé en ce que** les moyens d'appel et de communication téléphoniques permettant à au moins un desdits usagers (U_{c}) de composer ledit numéro unique d'appel sont constitués par des appareils téléphoniques portatifs ou mobiles communiquant avec ledit réseau de téléphonie cellulaire.

9. Système selon la revendication 7, **caractérisé en ce que** les moyens d'appel et de communication téléphoniques permettant à au moins un desdits usagers de composer ledit numéro unique d'appel sont constitués par des appareils téléphoniques (Tel, Cab) reliés à un réseau de téléphonie terrestre (Rtel) et à un central téléphonique (CT) et **en ce que** ce central téléphonique (CT) est lui-même relié auxdits moyens électronique de traitement d'information (OP).

10. Système selon la revendication 7, **caractérisé en ce que** les moyens d'appel et de communication téléphoniques permettant à au moins un desdits usagers de composer ledit numéro unique d'appel sont constitués par une borne d'appel (BT, BTₐ, BT_{b}) comprenant des moyens d'appel et de communication permettant de composer ledit numéro unique et d'établir des communications bidirectionnelles avec lesdits moyens électroniques de traitement de l'information (OP), un lecteur (LC, 33) d'une carte à puce (CP) détenue par un desdits usagers (Uₐ, U_{b}), déclenchant la composition, sur reconnaissance d'informations déterminées contenues sur ladite carte à puce (CP), dudit numéro unique par lesdits moyens d'appel et de communication, et des moyens transducteurs électroacoustiques (34, 35) pour ladite mise en communication téléphonique directe dudit usager (Uₐ, U_{b}) avec un desdits prestataires (Tₐ, T_{b}) du service particulier pour conclure une transaction.

11. Système selon la revendication 10, **caractérisé en ce que** ladite borne d'appel comprend en outre un clavier (32) pour saisir au moins un code d'identification de l'usager (Uₐ, U_{b}), des moyens de vérification et de comparaison de ce code avec des données d'identification enregistrées dans ladite carte à puce (CP), de manière à autoriser la composition dudit numéro unique et l'accès audit service particulier par l'usager (Uₐ, U_{b}) possesseur de ladite carte à puce (CP), un écran de visualisation (31) affichant des données de guidage de l'usager (Uₐ, U_{b}) et d'information sur ladite transaction en cours, et des moyens (36) pour l'impression de données d'information et d'horodatage associée à ladite transaction, une fois celle-ci conclue.

12. Application du procédé selon l'une quelconque des revendications 1 à 7 à l'appel centralisé de taxis (Tₐ, T_{b}) par composition d'un numéro unique.

## Claims

1. A method for centralized calling to access a specific service over a determined territory, said territory being covered by a radiotelephone network comprising a plurality of cells (Zl to Zn) associated with emitting-receiving antennas of radio-electric waves (E/R1 to E/Rn), comprising at least the following steps :
a) a calling step wherein a user (U1) willing to access to said service calls a given phone number that is the only sole one over the whole given territory for said service,
b) a locating step wherein the call geographical area the user (U1) calls from is located on said territory and data associated with that location are transmitted to a managing operator (OP) of said given service,
c) a step of emitting by said operator (OP) a general call via said cellular radiotelephone network that is directed to providers (T1 to Tx) of said specific service who are located in an area (Z1) closest to said call geographical area and are in a so-called available state,
d) an acceptation step wherein said general call is accepted by one among said providers (T1) of the specific service that are in said available state, said acceptation stopping the emission of the general call upon its detection by the operator (OP),
e) a step of establishing a direct phone connection by said operator (OP) between said calling user (U1) and said provider (T1) of said specific service having accepted said general call,
f) a final stopping step for stopping the transaction started with the calling user upon detection by said operator (OP) of said validation by said provider (T1),
g) and an optional reiteration step of repeating steps d) to f) in the case of said transaction been not validated, until it is effectively validated or the call initiated is abandoned by the user (U1).

2. A method according to claim 1 **characterized in that** said providers of said specific service (T1 to Tx) are equipped with a portable or mobile telephone device, **in that** it comprises a preliminary step of attaching a determined code to one of said emitting-receiving antennas (E/R1) of one of said cells of the radiotelephone network, so as to set said portable or mobile telephone device to said available state, and **in that** said validation step is obtained by emitting from said telephone device a specific code and transmitting it to said operator (OP).

3. A method according to claim 1 or 2 **characterized by** the fact that after said validation step of the transaction between said calling user (U1) and said provider (T1) of said specific service, it comprises an additional step of recording by said operator (OP) data associated with said validated transaction.

4. A method according to anyone of claims 1 to 3 **characterized in that** said calling of said sole phone number by a user (Uo, U1) is performed by dialing said phone number on a portable telephone device so as to call said operator (OP) via an emitting-receiving antenna (E/R1) of one of said cells (Z1) of the radio telephone network, and **in that** said locating step is performed by determining the area covered by said emitting-receiving antenna (E/R1).

5. A method according to anyone of claims 1 to 3 **characterized in that** calling by a user (Ud, Ue) said sole phone number is performed by dialing said number with a telephone device (Tel, Cab) connected to a ground telephone network (Rtel) and to a telephone switchboard (CT) in communication with said operator (OP), **in that** the locating step is performed by determining by said telephone switchboard (CT) the calling number as well as the geographical area of the telephone device (Tel, Cab) associated with it, and **in that** said general calling step consists in emitting said general calling in the cell (Z1) of said radiotelephone network that is the closest to said geographical location.

6. A method according to any of claims 1 to 3 **characterized in that** said calling by a user (Ua, Ub) is performed by inserting a chip card in a card reader (LC) associated with a telephone post (BTa, BTb) connected to said operator (OP), said call by said user (Ua, Ub) being initiated due to recognizing determined data that are registered on said chip card (CP), **in that** said locating step is performed by determining the geographical location of said calling post (Bta, BTb), and **in that** said general calling step consists in emitting said general calling in the cell (Z1) of the radiotelephone network that is closest to said geographical location.

7. A system (1, 1') for performing the method according to anyone of the previous claims, **characterized by** the fact that it comprises a cellular radiotelephone network covering said determined territory and dividing it into a plurality of cells, data processing (OP) computer means for the management of said cellular radiotelephony network that can be adressed to by said sole phone calling number, calling and phone communication means (BTa, BTb, Cab, Tel) that enable at least one of said users (Ua to Ue) to dial said calling sole phone number, and calling and telephone communication means at the disposal of said providers (Ta, Tb) of said specific service, in that those last means (Ta, Tb) comprise portable or mobile telephone devices in communication with said cellular telephone network, each device comprising means to selectively activate said specific service and a specific chip card allowing the operation of said specific service, in that said data-processing electronic means (OP) comprise devices to locate the geographical origin of a user's call (Ua to Ue), devices cooperating with said cellular telephone network for initiating a general call to said providers (Ta, Tb) of the specific service in the cell (Z1) closest to said geographical origin, for detecting the acceptation of the general call by one of said providers (Ta, Tb) of the specific service, stopping the general call upon such detection, and setting in direct telephone communication the calling and telephone communication means of said user (Ua to Ue) and those of said provider (Ta, Tb) of the specific service having accepted the general call, via said cellular telephone network, so as to initiate a transaction, devices for stopping said transaction upon detection of its validation by said provider (Ta, Tb) of said specific service or to initiate a renewed general call upon detection of its not being validated, and devices to register the data associated with said transaction.

8. A system according to claim 7 **characterized in that** the calling and telephone communication means allowing at least one of said users (Uc) to dial said sole phone number are composed of portable or mobile telephone devices in communication with said cellular telephone network.

9. A system according to claim 7 **characterized in that** the calling and telephone communication means allowing at least one of said users (Uc) to dial said sole phone number are composed of telephone devices (Tel, Cab) connected to a ground telephone network (Rtel) and to a telephone switchboard (CT), and **in that** said telephone switchboard is connected itself to said data-processing electronic means (OP).

10. A system according to claim 7 **characterized in that** the calling and telephone communication means allowing at least one of said users (Uc) to dial said sole phone number are composed of a telephone post (BT, BTa, BT) including calling and communication means allowing dialing said sole phone number and establishing bidirectional connections with said data-processing computer means (OP), a reader (LC,33) for a chip card (CP) belonging to one of said users (Ua, Ub), initiating the dialing by said calling and communication means of said sole phone number upon recognition of determined data stored in said chip card (CP), and electroacoustic transducer means (34, 35) for said setting direct telephone connection of said user (Ua, Ub) with one of said providers (Ta, Tb) of the specific service to conclude a transaction.

11. A system according to claim 10 **characterized in that** said calling post further comprises a keyboard (32) for dialing at least one identification code of the user (Ua, Ub), means to verify and compare that code with identification data stored in said chip card (CP), so as to allow dialing said sole phone number and accessing to said specific service by the user (Ua, Ub) whom said chip card (CP) belongs to, a display screen (31) for displaying guiding data for the user (Ua, Ub) and information data about said current transaction, and printing means for printing information and time data associated with said transaction once it is concluded.

12. The use of the method according to anyone of claims 1 to 7 for the centralized calling of taxis (Ta, Tb) by dialing an only sole phone number.

## Patentansprüche

1. Verfahren zur Durchführung eines zentralisierten Anrufs, um auf einen Sonderdienst auf der Gesamtheit eines bestimmten Territoriums zuzugreifen, wobei das Territorium durch ein Funktelefonienetz abgedeckt ist, das eine Vielzahl von Zellen (Z₁ - Zₙ) umfasst, die mit Sende- und Empfangsantennen (E/R₁ - E/Rₙ) für elektromagnetische Wellen bestückt sind, umfassend wenigstens die folgenden Schritte:
a) einen Anrufschritt, in dem ein Benutzer (U₁), der auf den genannten Dienst einer bestimmten Telefonnummer zugreifen will, die mit dem genannten Dienst verbunden ist und für die gesamte Einheit des genannten Territoriums unitär (eineindeutig, frz.: unique) ist:
b) einen Lokalisierungsschritt, um die geographische Anrufzone des Benutzers (U₁) auf dem genannten Territorium zu lokalisieren und die Daten, die sich auf die genannte Lokalisierung beziehen, an einen Operator (OP) des Sonderdienstes zu übermitteln;
c) einen Sendeschritt, in dem ein genereller Anruf durch den Operator, über das zelluläre Funktelefonienetz gesendet wird, der an den Provider (T₁ - Tₓ) des genannten Sonderdienstes gerichtet ist, der sich in einer Zone (Z₁) befindet, die in Bezug auf die genannte geographische Anrufzone die nächstliegende ist und sich in einem sogenannten erreichbaren Zustand befindet;
d) einen Akzeptierungsschritt, in dem der generelle Anruf durch einen der genannten Provider (T₁) des Sonderdienstes angenommen wird, der sich im erreichbaren Zustand befindet, wobei die Annahme die Sendeunterbrechung des generellen Anrufes bei ihrem Auffinden durch den Operator hervorruft;
e) einen Schritt der Einrichtung einer direkten Telefonverbindung durch den Operator (OP) zwischen dem anrufenden Nutzer (U₁) und dem Provider (T₁) des Sonderdienstes, der den generellen Anruf akzeptiert hat;
f) einen abschließenden Halteschritt, durchgeführt durch den Operator (OP) nach Feststellung der genannten Validisierung der Transaktion, die durch den anrufenden Nutzer eingeleitet wurde, durch den genannten Provider (T₁);
g) und einen optionalen Wiederholungsschritt der Schritte d) bis f) für den Fall, dass die genannte Transaktion nicht validisiert wird, bis zu einer Validisierung oder Aufgabe des eingeleiteten Anrufs durch den Nutzer (U₁).

2. Verfahren nach Anspruch 1, **dadurch gekennzeichnet, dass** die genannten Provider (T₁ - Tₓ) des Sonderdienstes mit einem tragbaren oder mobilen Telefonapparat ausgestattet sind, und dadurch, dass das Verfahren einen einleitenden Ankopplungsschritt an eine der genannten Sende- und Empfangsantennen (E/R₁) einer der genannten Zellen des Funktelefonienetzes und die Aussendung eines bestimmten Codes umfasst, so dass der genannte tragbare oder mobile Telefonapparat in den Zustand der Erreichbarkeit gesetzt wird, und dadurch, dass der Validisierungsschritt durch die Aussendung, ausgehend vom genannten Telefonapparat mit einem besonderen Code und ihre Übertragung zu dem genannten Operator (OP), hervorgerufen wird.

3. Verfahren nach einem der Ansprüche 1 oder 2, **dadurch gekennzeichnet, dass** nach dem Validisierungsschritt der Transaktion zwischen dem anrufenden Nutzer (U₁) und dem Provider (T₁) des Sonderdienstes ein zusätzlicher Registrierungsschritt, bei dem durch den Operator (OP) die Daten, die mit der validisierten Transaktion verbunden sind, registriert werden, vorgesehen ist.

4. Verfahren nach einem der Ansprüche 1 bis 3, **dadurch gekennzeichnet, dass** der Anruf an die unitäre Telefonnummer durch einen Nutzer (U_{c}, U₁) sich durch Wahl dieser Nummer bei einem tragbaren Telefonapparat vollzieht, und zwar dadurch, dass der Operator (OP) über eine Sende- und Empfangsantenne (E/R₁) einer Zelle (Z₁) des Funktelefonienetzes angerufen wird, und dadurch, dass der Lokalisierungsschritt durch die Bestimmung der Zone durchgeführt wird, die durch die betreffende Sende- und Empfangsantenne (E/R₁) abgedeckt ist.

5. Verfahren nach einem der Ansprüche 1 bis 3, **dadurch gekennzeichnet, dass** der Anruf an die unitäre Telefonnummer durch den Nutzer (U_{d}, Uₑ) sich durch die Wahl dieser Nummer über einen Telefonapparat (Tel, Cab) vollzieht, der an ein terrestrisches Telefonnetz (Rtel) und an eine Telefonzentrale (CT) angeschlossen ist, die mit dem genannten Operator in Verbindung stehen, und zwar derart, dass der Lokalisierungsschritt sich durch die Bestimmung über die genannte Telefonzentrale (CT) vollzieht, indem die anrufende Nummer und das geographische Gebiet des Telefonapparats (Tel, Cab), der damit verbunden ist, festgehalten wird, und dadurch, dass der generelle Anrufschritt darin besteht, dass der generelle Anruf in den Zellen (Z₁) des Funktelefonnetzes ausgesandt wird, der dem geographischen Gebiet am nächsten liegt.

6. Verfahren nach einem der Ansprüche 1 bis 3, **dadurch gekennzeichnet, dass** der Anruf zu der unitären Telefonnummer durch einen Nutzer (Uₐ, U_{b}) sich durch Einführung der Chipkarte (CP) in ein Kartenlesegerät (LC) vollzieht, das mit einem Telefonwählposten (Btₐ, Bt_{b}) verknüpft ist, der mit dem genannten Operator (OP) verbunden ist, wobei der Anruf des Nutzers (Uₐ, U_{b}) durch die Entschlüsselung der bestimmten Informationen aufgeschaltet wird, die auf der Chipkarte (CP) registriert sind, und zwar dadurch, dass der Lokalisierungsschritt sich durch Bestimmung des geographischen Gebiets des genannten Telefonwählpostens (Btₐ, Bt_{b}) vollzieht und dadurch, dass der generelle Anrufschritt darin besteht, dass der generelle Anruf in die Zelle (Z₁) des Funktelefonnetzes gesandt wird, die dem geographischen Gebiet am nächsten liegt.

7. System (1, 1') zur Durchführung des Verfahrens nach einem der vorhergehenden Ansprüche, **dadurch gekennzeichnet, dass** es umfasst:
- ein zelluläres Funktelefonienetz, das ein bestimmtes Territorium abdeckt und dieses in eine Vielzahl von Zellen aufteilt,
- elektronische Mittel zur Informationsverarbeitung (OP), um das genannte zelluläre Funktelefonienetz zu verwalten, das durch die unitäre Anrufnummer adressierbar ist,
- Mittel zum Anrufen und zur telefonischen Kommunikation (BTₐ, BT_{b}, Cab, Tel), die es wenigstens einem der genannten Nutzer (Uₐ - Uₑ) erlauben, die unitäre Anrufnummer zu wählen,
- und Mittel zum Anrufen und zur telefonischen Kommunikation zur Verfügung der Provider (Tₐ, T_{b}) des genannten Sonderdienstes,
- wobei die letztgenannten Mittel (Tₐ, T_{b}) tragbare und mobile Telefonapparate umfassen, die mit dem zellulären Telefonienetz in Verbindung stehen,
- wobei jeder Apparat Mittel besitzt, um selektiv den Sonderdienst zu aktivieren, sowie eine spezifische Chipkarte, die das Funktionieren für den Sonderdienst erlaubt,
- wobei weiterhin die genannten elektronischen Mittel zur Informationsverarbeitung (OP) Vorrichtungen zur Lokalisierung des geographischen Ursprungs eines Anrufes eines Nutzers (Uₐ - Uₑ) umfassen,
- Vorrichtungen, die mit dem genannten zellulären Telefonienetz kooperieren, um einen generellen Anruf der Provider (Tₐ, T_{b}) des Sonderdienstes in der zu dem geographischen Ursprung nächstliegenden Zelle (Z₁) einzuleiten, um die Akzeptierung des generellen Anrufes durch einen der Provider (Tₐ, T_{b}) des Sonderdienstes festzustellen,
- Halten des generellen Anrufes nach dieser Feststellung und direktes Verbinden der Anrufmittel und der Mittel der telefonischen Kommunikation des Nutzers (Uₐ - Uₑ) und der Provider (Tₐ, T_{b}) des Sonderdienstes, der den generellen Anruf angenommen hat, über das zelluläre Telefonienetz, so dass eine Transaktion eingeleitet wird,
- Vorrichtungen zur Beendigung der Transaktion nach Feststellung ihrer Validisierung durch den Provider (Tₐ, T_{b}) des Sonderdienstes oder durch Einleitung eines neuen generellen Anrufes auf Feststellung der Nicht-Validisierung hin,
- und Vorrichtungen zur Speicherung der Daten, die mit der genannten Transaktion verbunden sind.

8. System nach Anspruch 7, **dadurch gekennzeichnet, dass** die Mittel zum Anrufen und zur telefonischen Kommunikation wenigstens einem der Nutzer (U_{c}) erlauben, die unitäre Anrufnummer zu wählen, tragbare oder mobile Telefonapparate umfassen, die mit dem zellulären Telefonnetz kommunizieren.

9. System nach Anspruch 7, **dadurch gekennzeichnet, dass** die Mittel zum Anrufen und zur telefonischen Kommunikation wenigstens einem der Nutzer (U_{c}) erlauben, die unitäre Anrufnummer zu wählen, Telefonapparate (Tel, Cap) umfassen, die mit einem terrestrischen Telefonienetz (Rtel) und mit einer Telefonzentrale (CT) verbunden sind, und dadurch, dass die Telefonzentrale (CT) selbst mit dem elektronischen Mittel zur Informationsverarbeitung (OP) verbunden ist.

10. System nach Anspruch 7, **dadurch gekennzeichnet, dass** die Mittel zum Anrufen und zur telefonischen Kommunikation es wenigstens einem der Nutzer erlauben, die unitäre Anrufnummer zu wählen, sich zusammensetzen aus einem Telefonwählposten (BT, BTₐ, BT_{b}), der Mittel zum Anrufen und zur Kommunikation umfasst, die es erlauben, die genannte unitäre Nummer zu wählen und bidirektionale Kommunikationswege mit Hilfe der elektronischen Mittel (OP) zur Informationsverarbeitung zu etablieren, ein Lesegerät (LC, 33) für eine Chipkarte (CP), die im Besitz einer der Nutzer (Uₐ, U_{b}) ist und das die Wahl der unitären Nummer für die Mittel zum Anrufen und zur Kommunikation aufgrund der Entschlüsselung von bestimmten Informationen freigibt, die in jener Chipkarte (CP) enthalten sind,
und mit elektroakustischen Übertragungsmitteln (34, 35), um eine direkte telefonische Verbindung des Nutzers (Uₐ, U_{b}) mit den genannten Providern (Tₐ, T_{b}) des Sonderdienstes herzustellen, um eine Transaktion abzuschließen.

11. System nach Anspruch 10, **dadurch gekennzeichnet, dass** der genannte Telefonwählposten weiterhin eine Tastatur (32) umfasst, um wenigstens einen Identifikationscode des Nutzers (Uₐ, U_{b}) zu wählen, sowie Mittel zur Verifikation und zum Vergleich dieses Codes mit den registrierten Identifikationsdaten auf der Chipkarte (CP), so dass die Wahl dieser unitären Nummer und der Zugang zum Sonderdienst durch den Nutzer (Uₐ, U_{b}) autorisiert ist, der die Chipkarte (CP) besitzt, einen Bildschirm (31), der die Daten zur Anleitung des Nutzers (Uₐ, U_{b}) und die Informationen über die laufende Transaktion anzeigt, und Mittel (36) zum Ausdrucken der Informationsdaten und der Zeitangaben, die mit der genannten Transaktion verbunden sind, wenn letztere abgeschlossen ist.

12. Anwendung des Verfahrens nach einem der Ansprüche 1 bis 7 für das zentralisierte Anrufen von Taxis (Tₐ, T_{b}) durch Wahl einer unitären Telefonnummer.
